# EUROPÄISCHE PATENTANMELDUNG

(11) **EP 1 520 811 A1**
(43) Veröffentlichungstag der Anmeldung: **06.04.2005**
(21) Anmeldenummer: 04450129.4
(22) Anmeldetag: 17.06.2004
(51) Int. Cl.: B65G 47/14

(54) **Vorrichtung zum Fördern von länglichen Gegenständen**

(30) Priorität: 01.10.2003 AT 15552003
(71) Anmelder: Team Construct Maschinenbau Gesellschaft m.b.H., 9300 St. Veit an der Glan (AT)
(72) Erfinder: Aichholzer, Willibald, 9360 Friesach (AT)
(74) Vertreter: Beer, Manfred, Dipl.-Ing.

(57) **Zusammenfassung**

Eine Fördervorrichtung zum Transportieren länglicher Gegenstände, wie Bretter u.dgl. aus Holz, besitzt wenigstens zwei nebeneinander angeordnete Förder-Einheiten (1), wobei jede Förder-Einheit (1) mit einem Endlosförderglied (3) mit Mitnehmern (5) ausgestattet ist. Im Bereich eines sich schräg nach oben bewegenden Trums (4) des Endlosfördergliedes (3) aller oder einzelner Förder-Einheiten (1) ist eine Vorrichtung, beispielsweise eine Leiste (21) angeordnet, die von der Fördervorrichtung bewegte Gegenstände in Vibrationen quer (Pfeil 17) zur Förderrichtung versetzt. Dadurch, daß von der Fördervorrichtung bewegte Gegenstände (7) in Schwingungen versetzt werden, wird verhindert, daß Gegenstände (7, 7') übereinanderliegend befördert werden, so daß sichergestellt ist, daß die Gegenstände (7) am Ende der Fördervorrichtung einzeln und nacheinander ankommen.

## Beschreibung

Die Erfindung betrifft eine Vorrichtung zum Fördern von länglichen Gegenständen, mit den Merkmalen des einleitenden Teils von Anspruch 1.

Unter dem im Vorliegenden verwendeten Begriff "länglicher Gegenstand" sind beispielsweise Schnittholz, wie Bretter, Leisten, Latten, Bohlen, Pfosten, Prismen, weiters Hobelware und Rundhölzer zu verstehen.

Derartige Förderer werden verwendet, um längliche Gegenstände, wie Bretter (aus Holz), die von einem Zuführförderer ungeordnet und als Haufwerk in eine Zerteilermulde gefördert werden, aus der Zerteilermulde zu einem Ausrichtrollgang zu befördern. Dabei soll von der Fördervorrichtung ("S-Zerteiler") ein Gegenstand (Brett) nach dem anderen aus einer Zerteilermulde aufgenommen und zum Ausrichtrollgang bewegt werden.

In der Praxis tritt allerdings nicht so selten der Fall ein, daß Gegenstände wie Bretter, übereinander zu liegen oder stehen kommen ("doppeln") und übereinanderliegend oder übereinanderstehend von der Fördervorrichtung aus der Zerteilermulde zum Ausrichtrollgang bewegt werden. Es ist daher bislang erforderlich, daß eine Bedienungsperson den Vorgang beobachtet und im Bedarfsfall übereinanderliegende Gegenstände auseinanderbewegt, so daß diese auf dem Ausrichtrollgang nebeneinander zu liegen kommen.

Dies stellt eine zusätzliche Arbeitsbelastung dar.

Der Erfindung liegt die Aufgabe zugrunde, eine Fördervorrichtung der eingangs genannten Gattung zur Verfügung zu stellen, mit welcher sichergestellt ist, daß längliche Gegenstände jeweils einzeln und nicht übereinander, beispielsweise aus einer Zerteilmulde zu einem Ausrichtrollgang, gefördert werden.

Gelöst wird diese Aufgabe erfindungsgemäß mit einer Vorrichtung, welche die Merkmale von Anspruch 1 aufweist.

Bevorzugte und vorteilhafte Ausgestaltungen der Erfindung sind Gegenstand der Unteransprüche.

Da bei der erfindungsgemäßen Vorrichtung dem sich schräg nach oben bewegenden Abschnitt der Fördervorrichtung eine Einrichtung zugeordnet ist, welche die auf diesem liegenden länglichen Gegenstände in Vibrationen versetzt, rutschen auf einem unteren, unmittelbar auf der Fördervorrichtung aufliegenden länglichen Gegenstand allenfalls liegende oder stehende, längliche Gegenstände von diesem ab, mit dem Ergebnis, daß die länglichen Gegenstände einzeln und nacheinander einer nachgeschalteten Vorrichtung, z.B. einem Ausrichtrollgang, zugeführt werden.

Die Vibrationen erteilenden Einrichtung kann beispielsweise wenigstens eine Leiste sein, die sich nach oben bewegenden Trumen der Endlosförderglieder der Fördervorrichtung zugeordnet ist. Bevorzugt ist dabei, daß die schwingende Leiste (oder die Leisten) neben einem längliche Gegenstände fördernden Trum der Endlosförderglieder angeordnet sind, so daß sie nur an den geförderten Gegenständen angreifen und diese in Vibration versetzen.

Dabei kann die Ausrichtung der Leiste so gewählt werden, daß sie ihre Vibrationsschwingungen um eine Null-Lage ausführt, die verstellbar ist, um die Vorrichtung an verschieden starke längliche Gegenstände anpassen zu können.

Weitere Einzelheiten und Merkmale der Erfindung ergeben sich aus der nachstehenden Beschreibung eines bevorzugten Ausführungsbeispieles.

Es zeigt:
Fig. 1 in Seitenansicht eine Förder-Einheit einer erfindungsgemäßen Vorrichtung zum Fördern von Brettern zwischen einem Zuführförderer und einem Ausrichtrollgang und
Fig. 2 eine Einzelheit der Förder-Einheit in vergrößertem Maßstab.

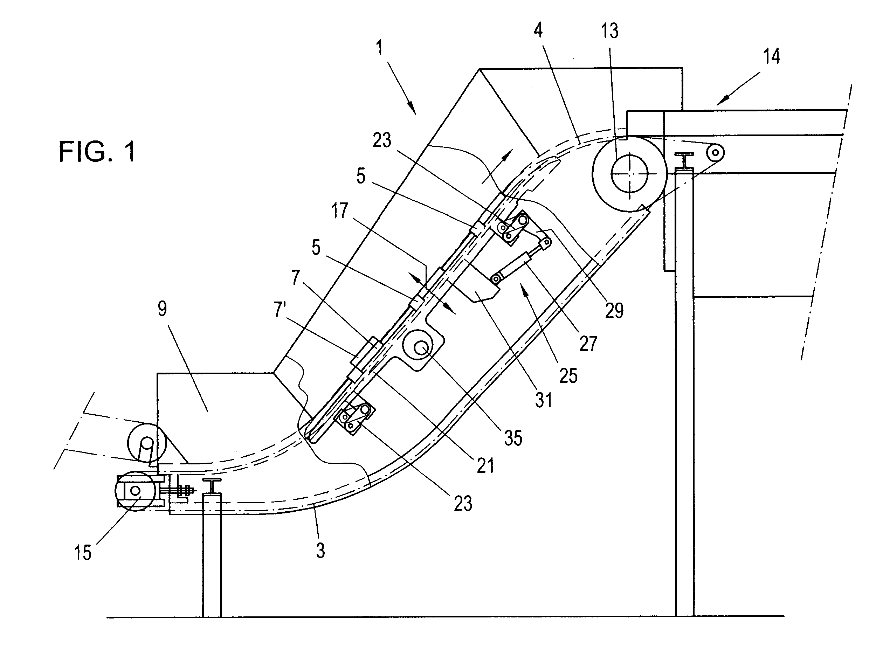

Die erfindungsgemäße Fördervorrichtung weist wenigstens zwei fluchtend nebeneinander angeordnete Förder-Einheiten 1, der in Fig. 1 gezeigten Bauart ("S-Zerteiler") auf. Die Zahl der Einheiten 1 der Fördervorrichtung richtet sich nach der Länge der zu fördernden, länglichen Gegenstände, im gezeigten Ausführungsbeispiel der Bretter 7. In dem in Fig. 1 gezeigten Ausführungsbeispiel ist die Förder-Einheit 1 im wesentlichen S-förmig ausgeführt und weist ein Endlosförderglied 3 auf, auf dessen Außenseite Mitnehmer 5 vorgesehen sind. Das Förderglied 3 nimmt Bretter 7 aus einer am unteren Ende der Fördervorrichtung aus Förder-Einheiten 1 vorgesehenen Zerteilmulde 9 auf und fördert diese nach oben, wo die Bretter 7 beispielsweise auf das Aufnahmeende eines Ausrichtrollganges 14 abgegeben werden. Derartige Fördervorrichtungen der Förder-Einheiten 1 sind an sich bekannt.

Der Antrieb 13 der Endlosförderglieder 3 (z.B. Rollenketten, od. ähnl.) der Förder-Einheiten 1 ist im Ausführungsbeispiel dem oberen Ende der Förder-Einheit 1 zugeordnet. Am unteren Ende ist lediglich eine Spannvorrichtung 15 für die Endlosförderglieder 3 vorgesehen.

Den Endlosfördergliedern 3 der erfindungsgemäßen Fördervorrichtung mit ihren Förder-Einheiten 1 oder wenigstens einer Förder-Einheit 1 der erfindungsgemäßen Fördervorrichtung ist wenigstens eine Leiste 21 zugeordnet, die relativ zu dem sich schräg nach oben bewegenden Trum 4 der Förder-Einheit 1 in schwingende Bewegungen mit einer Schwingungsrichtung (Pfeil 17) quer zur Längserstreckung des Trum 4 versetzbar ist. Hiezu ist die parallel zu dem Trum 4 ausgerichtete und neben diesem angeordnete Leiste 21 über Parallelogrammlenker 23 im Maschinengestell oder an einen stillstehenden Teil der Förder-Einheit 1 gelagert, wobei je ein Lenker 23 am oberen und am unteren Ende der Leiste 21 vorgesehen ist.

Die Schwingbewegungen (Vibrationen) mit einer Amplitude in der Größenordnung von 1 mm werden auf die auf den Trumen 4 aufliegenden und nach oben bewegten Bretter 7 übertragen.

Im Bereich des oberen Endes jeder Leiste 21 ist eine Verstellvorrichtung 25 für das Einstellen der Null-Lage der Leiste 21 relativ zu sich nach oben bewegenden Trumen 4 der Förder-Einheiten 1 vorgesehen. Diese Einstellvorrichtung 25 umfaßt im gezeigten Ausführungsbeispiel einen Hydraulikzylinder 27, der zwischen einem gestellfesten Ausleger 29 und einem Arm 31, der mit der Leiste 21 fest verbunden ist, angeordnet ist.

Etwa im mittleren Bereich der Leiste 21 ist eine Vibrationsvorrichtung 35 (Schwingungserzeuger) vorgesehen, beispielsweise ein Motor mit einer exzentrischen Schwungmasse, als Schwingungserzeuger, um der Leiste 21 die erwähnten, quer zur Längserstreckung der sich nach oben bewegenden Trume 4 der Förder-Einheit 1 ausgerichteten Schwingbewegungen zu erteilen. Diese Schwingbewegungen (Pfeil 17) sind auch quer zu den Brettern 7 ausgerichtet.

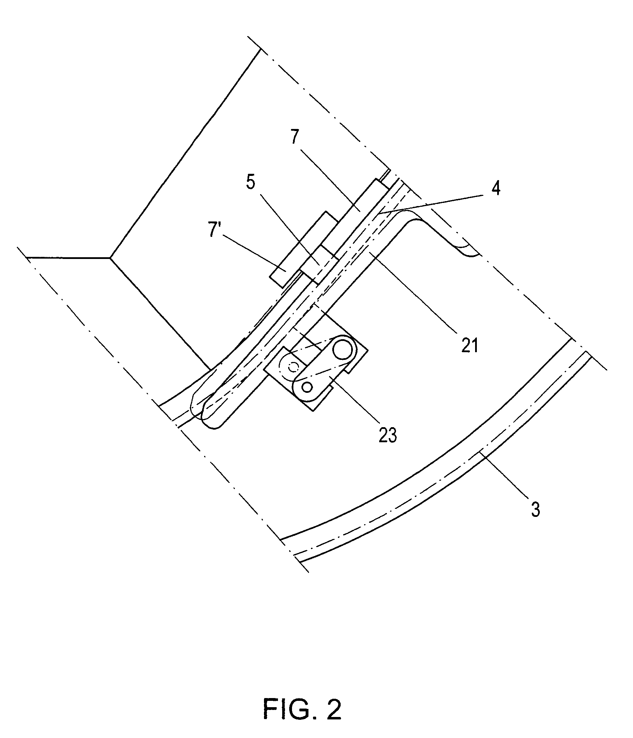

Durch diese schwingenden Bewegungen (Vibrationen) wird, wie dies in Fig. 2 gezeigt ist, ein auf einem von Mitnehmern 5 der Endlosförderglieder 3 bewegtem und auf den Trumen 4 liegenden Brett 7 aufliegendes Brett 7' zum Abgleiten vom unteren Brett 7 gebracht und gelangt zu den nächsten Mitnehmern 5, oder wieder in die Zerteilermulde 9 zurück.

Damit die Vorrichtung 1 mit ihren Förder-Einheiten gemäß der Erfindung auch für das Fördern unter Vereinzeln für verschieden starke (dicke) Bretter 7 verwendet werden kann, kann die Null-Stellung, also die Mittellage der schwingenden Leiste 21 (Rüttelhebeschiene) mit Hilfe der oben beschriebenen Verstellvorrichtung 25 verstellt werden. Dabei ist vorgesehen, daß für dünnere Bretter 7 die Null-Lage nach außen, also nach schräg links oben in Fig. 2 verstellt wird, so daß das obere Brett 7' (eines "Doppels", also zwei übereinanderliegende Bretter 7, 7') sicher oberhalb des oberen Randes der Mitnehmer 5 zu liegen kommt, und vom unteren, von den Mitnehmern 5 gehaltenen Brett 7 abrutschen kann, wenn die Schwingungsamplitude der Leiste 21 ihren höchsten Punkt erreicht hat.

Wenngleich im Vorliegenden ein Ausführungsbeispiel einer erfindungsgemäßen Fördervorrichtung beschrieben worden ist, mit dem Bretter 7 befördert werden können, und wobei verhindert wird, daß übereinanderliegende oder -stehende Bretter ("gedoppelte Bretter") gefördert werden, ist die erfindungsgemäße Vorrichtung grundsätzlich für das Fördern beliebiger länglicher Gegenstände, wofür Beispiele in der Beschreibungseinleitung genannt sind, geeignet, wobei jeweils verhindert wird, daß übereinanderliegende oder -stehende Gegenstände transportiert werden.

Es versteht sich, daß bei der erfindungsgemäßen Vorrichtung zum Fördern von länglichen Gegenständen nicht alle Förder-Einheiten 1 mit einer die geförderten Gegenstände 7 in Vibrationen versetzenden Einrichtung 21, 35 ausgerüstet sein müssen. Es genügt im Prinzip, das wenigstens eine von zwei oder mehreren Förder-Einheiten 1 mit der erfindungsgemäßen, Vibrationen erteilenden Einrichtung 21, 35, beispielsweise der im Ausführungsbeispiel vorgesehenen Leiste 21, ausgestattet sind.

Zusammenfassend kann ein Ausführungsbeispiel der Erfindung wie folgt beschrieben werden:

Eine Fördervorrichtung zum Transportieren länglicher Gegenstände, wie Bretter u.dgl. aus Holz, besitzt wenigstens zwei nebeneinander angeordnete Förder-Einheiten 1, wobei jede Förder-Einheit 1 mit einem Endlosförderglied 3 mit Mitnehmern 5 ausgestattet ist. Im Bereich eines sich schräg nach oben bewegenden Trums 4 des Endlosfördergliedes 3 aller oder einzelner Förder-Einheiten 1 ist eine Vorrichtung, beispielsweise eine Leiste 21 angeordnet, die von der Fördervorrichtung bewegte Gegenstände in Vibrationen quer (Pfeil 17) zur Förderrichtung versetzt. Dadurch, daß von der Fördervorrichtung bewegte Gegenstände 7 in Schwingungen versetzt werden, wird verhindert, daß Gegenstände 7, 7' übereinanderliegend befördert werden, so daß sichergestellt ist, daß die Gegenstände 7 am Ende der Fördervorrichtung einzeln und nacheinander ankommen.

## Patentansprüche

1. Vorrichtung zum Fördern von länglichen Gegenständen (7) mit Hilfe einer aus zwei oder mehreren nebeneinander angeordneten Förder-Einheiten (1) bestehenden Fördervorrichtung mit Endlosfördergliedern (3), auf denen Mitnehmer (5) für Bretter (7) vorgesehen sind, wobei die Endlosförderglieder (3) aller Förder-Einheiten (1) synchron bewegt werden, **dadurch gekennzeichnet, daß** im Bereich des sich schräg nach oben bewegenden Trums (4, 5) von wenigstens einem Endlosförderglied (3) der Fördervorrichtung ein Schwingungserzeuger (21) zugeordnet ist.

2. Vorrichtung nach Anspruch 1, **dadurch gekennzeichnet, daß** der Schwingungserzeuger (21) Schwingbewegungen (Pfeil 17) senkrecht zur Bewegungsrichtung der Endlosförderglieder (3) ausführt.

3. Vorrichtung nach Anspruch 1 oder 2, **dadurch gekennzeichnet, daß** der Schwingungserzeuger eine Leiste (21) aufweist, die den länglichen, vom Trum (4) beförderten Gegenständen (7) zugeordnet ist.

4. Vorrichtung nach Anspruch 3, **dadurch gekennzeichnet, daß** die Leiste (21) quer zur Bewegungsrichtung der Bretter (7) fördernden Trume (4) der Fördervorrichtung (1) verstellbar ist.

5. Vorrichtung nach Anspruch 4, **dadurch gekennzeichnet, daß** die Leiste (21) über Lenker (23) verschwenkbar gelagert ist.

6. Vorrichtung nach einem der Ansprüche 3 bis 5, **dadurch gekennzeichnet, daß** die Leiste (21) mit einer diese in Schwingungen versetzenden Einrichtung (35) gekuppelt ist.

7. Vorrichtung nach Anspruch 6, **dadurch gekennzeichnet, daß** die Leisten (21) in Schwingungen versetzende Einrichtung (35) ein Motor mit einem Exzentergewicht ist.

8. Vorrichtung nach einem der Ansprüche 3 bis 7, **dadurch gekennzeichnet, daß** die Null-Stellung (Mittellage der Schwingungen) der Leiste (21) relativ zu dem Bretter (7) fördernden Trum (4) des Endlosgliedes (3) einstellbar ist.

9. Vorrichtung nach Anspruch 8, **dadurch gekennzeichnet, daß** zum Einstellen der Null-Lage der Leiste (21) ein längenveränderliches Glied (27) vorgesehen ist, daß zwischen der Leiste (21) oder einem an diesem vorgesehenen Ansatz (31) und einem gestellfesten Punkt (29) eingespannt ist.

10. Vorrichtung nach Anspruch 9, **dadurch gekennzeichnet, daß** das längenveränderliche Glied ein Hydraulikzylinder (27) ist.

11. Vorrichtung nach einem der Ansprüche 1 bis 10, **dadurch gekennzeichnet, daß** sich das Endlosförderglied (3) der Fördervorrichtung (1) mit ihrem länglichen Gegenstände (7) fördernden Trum (4) längs einer im wesentlichen S-förmigen Bahn schräg nach oben bewegt.

12. Vorrichtung nach einem der Ansprüche 3 bis 11, **dadurch gekennzeichnet, daß** die Leiste (21) parallel zu dem längliche Gegenstände (7) fördernden Trum (4) des Endlosfördergliedes (3) ausgerichtet ist.

13. Vorrichtung nach einem der Ansprüche 3 bis 12, **dadurch gekennzeichnet, daß** die Leiste (21) neben dem längliche Gegenstände (7) fördernden Trum (4) des Endlosfördergliedes (3) angeordnet ist.

14. Vorrichtung nach einem der Ansprüche 1 bis 13, **dadurch gekennzeichnet, daß** dem unteren Ende der Fördervorrichtung (1) eine Zerteilmulde (9) und dem oberen Ende der Fördervorrichtung (1) ein Ausrichtrollgang (14) zugeordnet sind.
